# EUROPÄISCHE PATENTSCHRIFT

(11) **EP 0 882 274 B1**
(45) Veröffentlichungstag und Bekanntmachung des Hinweises auf die Patenterteilung: **06.10.1999**
(21) Anmeldenummer: 97901588.0
(22) Anmeldetag: 22.01.1997
(51) Int. Cl.: G06K 19/077

(54) **VORRICHTUNG ZUM VERARBEITEN UND SPEICHERN VON DATEN**
DEVICE FOR PROCESSING AND STORAGE OF DATA
DISPOSITIF POUR TRAITER ET STOCKER DES DONNEES

(30) Priorität: 05.02.1996 DE 19604045
(43) Veröffentlichungstag der Anmeldung: 09.12.1998
(73) Patentinhaber: SIEMENS AKTIENGESELLSCHAFT, 80333 München (DE); Philips Semiconductors Gratkorn GmbH, 8101 Gratkorn (AT); Koninklijke Philips Electronics N.V., 5621 BA Eindhoven (NL)
(72) Erfinder: BERGER, Dominik, A-8045 Graz (AT); EBER, Wolfgang, A-8047 Graz (AT); HOLWEG, Gerald, A-8055 Graz (AT); FIBRANZ, Heiko, D-81377 München (DE); REINER, Robert, D-82008 Unterhaching (DE); SCHRAUD, Gerhard, D-86415 Mering (DE); STRUBEL, Walter, D-82229 Seefeld (DE); WEITZEL, Joachim, D-85229 Markt Indersdorf (DE)
(74) Vertreter: Epping, Wilhelm, Dr.-Ing.
(86) Internationale Anmeldenummer: EP9700294
(87) Internationale Veröffentlichungsnummer: WO9729454

(56) Entgegenhaltungen:
- EP-A- 0 534 559
- DE-A- 4 310 334
- DE-A- 4 337 202
- DE-A- 4 406 704

## Beschreibung

Die Erfindung betrifft eine Vorrichtung zum Verarbeiten und Speichern von Daten, insbesondere eine Chipkarte, mit einer ersten, kontaktbehafteten Schnittstelle und mit einer zweiten, kontaktlosen Schnittstelle zum Empfangen von Energie von und zur Kommunikation mit einem Endgerät, mit einem nicht-flüchtigen Halbleiterspeicher, mit einem steuerbaren Schalter, über den entweder die erste oder die zweite Schnittstelle mit dem Halbleiterspeicher über Adreß-, Daten- und Kontrolleitungen verbindbar ist und mit einer Logikschaltung, die den Schalter ansteuert.

Eine solche Vorrichtung ist aus der DE 39 35 364 C1 bekannt. Die dortige kombinierte Chipkarte läßt sich sowohl über galvanische Kontaktierung als auch kontaktlos über induktive Kopplung mittels einer Sendeeinheit mit Energie versorgen. Auch der Datenaustausch erfolgt über beide Übertragungswege, wobei Energie und Daten von der Kontaktschnittstelle direkt über einen Multiplexer einer Verarbeitungseinheit und einem Speicher zugeführt werden, während beim kontaktlosen Übertragungsweg zwischen der induktiven Schnittstelle und dem Multiplexer eine Schaltung angeordnet ist, die aus einem empfangenen hochfrequenten Signal die Daten und eine Gleichspannung gewinnt, bzw. ein zu sendendes Trägersignal mit einem Datensignal moduliert, um diese über den Multiplexer der Verarbeitungseinheit und dem Speicher zuzuführen bzw. von dort zu erhalten.

Eine denkbare Einsatzmöglichkeit solcher kombinierter Chipkarten - wobei die Kartenform heute zwar üblich ist, jedoch auch andere Formen solcher Vorrichtungen zum Verarbeiten und Speichern von Daten denkbar sind. Es sind derzeit auch Schlüssel gebräuchlich und es wurden schon Uhren vorgeschlagen - ist im Nahverkehr zu sehen, wo Passagiere eine Karte in der Tasche haben, in deren Speicher ein Geldwert abgespeichert ist, der über den kontaktlosen Übertragungsweg beim Betreten eines Transportmittels um den Fahrpreis verringert wird. Nach dem Verbrauch des Geldwerts kann der Speicher wieder, vorzugsweise über den kontaktbehafteten Übertragungsweg, an einem Bankterminal "aufgeladen" werden, indem derselbe Betrag von einem Girokonto abgehoben wird bzw. bar einzugeben ist.

Bei der bekannten Chipkarte sind jedoch beide Übertragungswege völlig gleichberechtigt und es findet zudem eine automatische Umschaltung des Multiplexers auf denjenigen Übertragungsweg statt, von dem die höhere Versorgungsspannung kommt.

Bei zumindest all den Anwendungsformen der bekannten Chipkarte, bei denen ein im Speicher abgelegtes Datum einem Geldwert entspricht, der zum Bezahlen von Waren oder Dienstleistungen dienen kann und der beispielsweise an einem Bankterminal wieder erhöht werden kann, um eine Wiederverwendung der Karte zu ermöglichen, ist es jedoch wünschenswert, wenn dieses "Wiederaufladen" nur über den kontaktbehafteten Übertragungsweg möglich ist. Das "Wiederaufladen" der Karte ist eine hochsensible Operation, die eine Reihe von Sicherheitsvorkehrungen nötig macht, die bei kontaktlosen Datenübertragungen nicht zu erfüllen sind, da dort bereits der Übertragungsweg nicht abhörsicher gestaltet werden kann. Bei kontaktbehafteten Übertragungswegen ist es jedoch bereits bekannt, eine Kommunikation zwischen einer Karte und einem Terminal, in das die Karte eingeführt wird, erst zustande kommen zu lassen, wenn die Karte unzugänglich in einem verschließbaren Einführschacht des Terminals liegt.

Die Aufgabe vorliegender Erfindung ist es somit, eine Vorrichtung zum Verarbeiten und Speichern von Daten mit verschiedenen Übertragungswegen anzugeben, die einen Übertragungsweg - selektiven Zugriff auf den Speicher ermöglicht.

Die Aufgabe wird durch eine Vorrichtung gemäß Anspruch 1 gelöst. Vorteilhafte Weiterbildungen sind in den Unteransprüchen angegeben.

Die erfindungsgemäße steuerbare Schalteinrichtung kann abhängig von der Stellung des steuerbaren Schalters und der Speicheradresse die Verbindung zwischen dem steuerbaren Schalter und dem Speicher und damit zwischen den Schnittstellen und dem Speicher unterbrechen oder schließen und somit einen selektiven Zugriff zum Speicher ermöglichen. Das heißt, es können Speicherbereiche vorgesehen sein, auf die nur über die kontaktbehaftete, erste Schnittstelle und solche, auf die nur über die kontaktlose, zweite Schnittstelle zugegriffen werden kann.

In Weiterbildung der Erfindung ist die erfindungsgemäße Schalteinrichtung auch durch die Kontrolleitungen des Speichers ansteuerbar, so daß die Selektion auch aufgrund der auszuführenden Speicheroperation wie Lesen oder Schreiben oder bestimmte Formen davon möglich ist. Es kann zum Beispiel vorgesehen sein, daß ein schreibender Zugriff, der den im Speicher gespeicherten Geldwert erhöht, nur über den kontaktbehafteten Übertragungsweg möglich ist.

In weiterer Ausgestaltung können auch die einzuschreibenden oder auszulesenden Daten als Selektionskriterium herangezogen werden.

Die Information über die Stellung des steuerbaren Schalters kommt dabei von der Logikschaltung, die die Schalteinrichtung mit demselben oder einem davon abgeleiteten Signal ansteuert wie den steuerbaren Schalter selbst.

In vorteilhafter Weise kann die Logikschaltung ein Mikroprozessor sein, der zudem in erfindungsgemäßer Weiterbildung zwischen der ersten Schnittstelle und dem steuerbaren Schalter angeordnet sein kann. Dadurch können die Adreß-, Daten- und Kontrollsignale von der ersten Schnittstelle nur über den Mikroprozessor zum Speicher gelangen, wodurch eine weitere Selektionsmöglichkeit gegeben ist.

Durch die erfindungsgemäße Anordnung des Mikroprozessors ist es möglich, ein Umschalten des steuerbaren Schalters auf die erste Schnittstelle nur dann zu bewirken, wenn zwischen einer Karte und einem Terminal bzw. einem Benutzer eine Identifikations- und/oder Authentifikationsprozedur erfolgreich durchgeführt wurde. Besonders vorteilhaft im Sinne einer hohen Sicherheit ist es hierbei, wenn der steuerbare Schalter ein Schalter ist, der unmittelbar nach dem Anlegen der Versorgungsspannung die zweite Schnittstelle mit dem Speicher verbindet und nur aufgrund einer Ansteuerung durch den Mikroprozessor umschaltet und erst bei Wegfall der Versorgungsspannung wieder in den Anfangszustand zurückfällt.

Der steuerbare Schalter kann Bestandteil des Speichers sein, so daß dieser als Zweitorspeicher oder Dual-Port-Memory ausgebildet ist. Auch die Schalteinrichtung wird dann in vorteilhafter Weise als Teil des Speichers ausgebildet sein.

Die Schalteinrichtung enthält neben Schaltmitteln ein Schaltlogikteil, das die Adreß-, Kontroll- und Datensignale sowie das Steuersignal von der Logikschaltung, insbesondere dem Mikroprozessor, auswertet und abhängig davon das oder die Schaltmittel betätigt. Das Schaltlogikteil kann fest verdrahtet sein, ist in besonders vorteilhafter Weise aber durch ein ROM realisiert, da hierdurch in einfacher Weise anwendungsabhängige unterschiedliche Selektionskriterien eingestellt werden können. Es sind aber auch Ausgestaltungen mit programmierbaren nicht-flüchtigen Speichern wie PROMs, EPROMs oder EEPROMs möglich, jedoch muß hierbei darauf geachtet werden, daß das Umprogrammieren dieser Speicher nicht oder nur unter bestimmten Bedingungen möglich ist.

Die Erfindung wird nachfolgend anhand eines Ausführungsbeispiels mit Hilfe einer Figur näher erläutert.

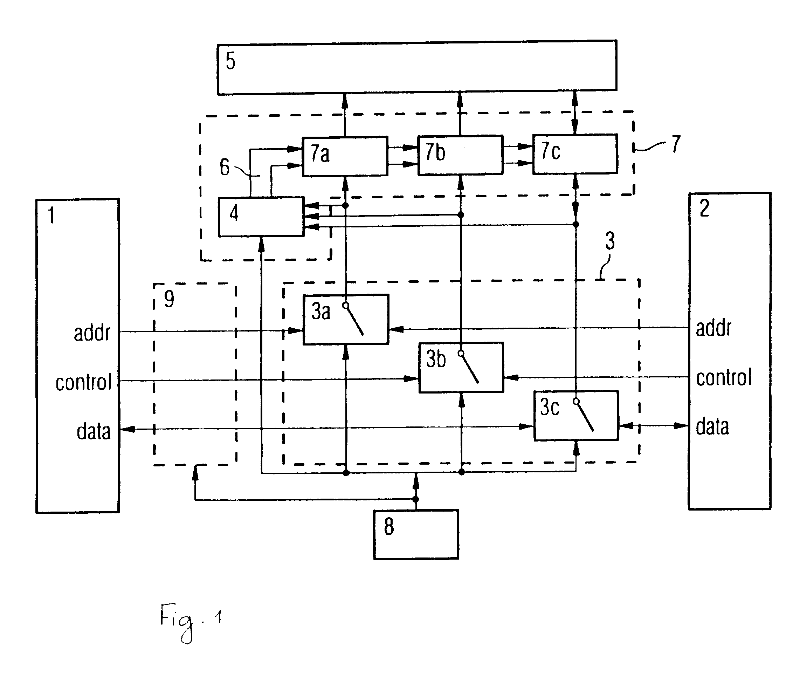

Die Figur zeigt in schematischer Darstellung die für die Erfindung wesentlichen Teile einer Vorrichtung zum Verarbeiten und Speichern von Daten. Eine solche Vorrichtung kann insbesondere eine sogenannte Chipkarte sein, also eine Plastikkarte in Kreditkartenformat, in die ein Halbleiterchip eingebettet ist, und die mit Schnittstellen versehen ist, um Energie und Daten zum Halbleiterchip übertragen zu können. Die Erfindung ist jedoch auch bei jeder anderen räumlichen Ausgestaltung einer Vorrichtung zum Verarbeiten und Speichern von Daten anwendbar.

In der Figur ist eine erste kontaktbehaftete Schnittstelle 1 über Adreß- (addr), Kontroll- (control) und Datenleitungen (data) mit einem steuerbaren Schalter 3 verbunden. Der steuerbare Schalter 3 ist hier mit drei Einzelschaltern 3a, 3b, 3c dargestellt, wobei jeder der Einzelschalter für eine der drei Signalleitungen bestimmt ist. Jede der genannten Signalleitungen addr, control, data ist jedoch üblicherweise einige Bit breit, so daß damit auch jeder der Einzelschalter 3a, 3b, 3c aus entsprechend vielen Schaltmitteln aufgebaut ist. Über die erste Schnittstelle 1 ist ein galvanischer Kontakt mit einem nicht dargestellten Schreib-Lesegerät, das ein Bankterminal sein kann, galvanisch verbindbar. Über diese Kontakte werden üblicherweise auch die Versorgungsspannungen übertragen, die hier jedoch aus Übersichtlichkeitsgründen weggelassen wurden.

Mit dem steuerbaren Schalter 3 ist auch eine zweite, kontaktlose Schnittstelle 2 über entsprechende Adreß-, Kontroll- und Datenleitungen verbunden. Die zweite Schnittstelle 2 ist beispielsweise mit einer Spule gebildet, um über induktive Kopplung einen Kontakt mit einem Terminal herstellen zu können. Die Spule empfängt ein hochfrequentes, moduliertes Trägersignal, das in einer nicht dargestellten Schaltung verarbeitet wird, um daraus die Versorgungsspannungen sowie die Adreß-, Kontroll- und Datensignale zu gewinnen. In gleicher Weise wird diese Schaltung die von der Vorrichtung zur Verarbeitung und Speichern von Daten an ein Terminal zu sendenden Daten einem hochfrequenten Träger aufmodulieren.

Die Adreß-, Kontroll- und Datensignale von entweder der ersten oder der zweiten Schnittstelle 1, 2 sollen einem nicht-flüchtigen Halbleiterspeicher 5 über den steuerbaren Schalter 3 abhängig von dessen Schaltstellung zugeführt werden. Zum Einstellen der Schaltstellung wird der Schalter 3 von einer Logikschaltung 8 angesteuert. In vorteilhafter Ausbildung ist der Schalter 3 ein Schalter, der unmittelbar nach dem Anlegen der Versorgungsspannung die zweite Schnittstelle 2 mit dem Halbleiterspeicher 5 verbindet, auch wenn kein Ansteuersignal von der Logikschaltung 8 vorhanden ist. Erst durch Ansteuerung durch die Logikschaltung 8 kann der Schalter 3 umgeschaltet werden, so daß die erste Schnittstelle 1 mit dem Halbleiterspeicher 5 verbunden ist. Erst nach Wegfall der Versorgungsspannung fällt dieser Schalter von selbst wieder in seinen Anfangszustand zurück. Auf diese Weise kann sichergestellt werden, daß eine Ansteuerung des Halbleiterspeichers 5 über die erste kontaktbehaftete Schnittstelle 1 nur nach Ansteuerung des steuerbaren Schalters 3 über die Logikschaltung 8 erfolgen kann, wobei die Erzeugung des Ansteuersignals von zusätzlichen Bedingungen abhängig gemacht werden kann.

In besonders vorteilhafter Ausbildung ist die Logikschaltung 8 mit einem Mikroprozessor gebildet, wobei dieser Mikroprozessor in besonders vorteilhafter Ausgestaltung zwischen der ersten Schnittstelle 1 und dem steuerbaren Schalter 3 angeordnet ist, so daß die Adreß-, Kontroll- und Datensignale nur über den Mikroprozessor dem Schalter 3 zugeführt werden können. Auf diese Weise kann erreicht werden, daß ein Umschalten des steuerbaren Schalters 3 auf die erste Schnittstelle 1 und ein Übertragen der über die erste Schnittstelle 1 zu geführten Adreß-, Kontroll- und Datensignale erst erfolgt, wenn zwischen der Vorrichtung zum Verarbeiten und Speichern von Daten und einem Terminal bzw. einem Benutzer der Vorrichtung ein Identifikations- bzw. Authentifikationsverfahren durchgeführt wurde.

In erfindungsgemäßer Weise ist der steuerbare Schalter 3 über eine Schalteinrichtung 7 mit dem Halbleiterspeicher 5 verbunden. Die Schalteinrichtung 7 ist hierbei mit Schaltmitteln 7a, 7b, 7c gebildet, die die Verbindungsleitungen zwischen dem Schalter 3 und dem Halbleiterspeicher 5 unterbrechen bzw. dort verbinden können. Die Schaltmittel 7a, 7b, 7c sind von einem Schaltlogikteil 4 über Leitungen 6 ansteuerbar. Das Schaltlogikteil 4 ist einerseits mit den Adreß-, Kontroll- und Datensignalausgängen des Schalters 3 verbunden und andererseits mit dem Ausgang der Logikschaltung 8, der den Steuereingang des steuerbaren Schalters 3 ansteuert. Das Schaltlogikteil 4 steuert die Schaltmittel 7a, 7b, 7c abhängig von der Schalterstellung sowie den Signalen auf den Adreß-, Kontroll- und Datenleitungen an. Auf diese Weise können bezüglich der Schnittstellen 1, 2 unterschiedliche Zugriffsmöglichkeiten auf den Halbleiterspeicher 5 verwirklicht werden, ohne daß ein Anwender oder Benutzer sie später erweitern konnte.

Das Schaltlogikteil 4 der Schalteinrichtung 7 kann hierbei fest verdrahtet sein, ist in vorteilhafter Ausbildung jedoch durch ein ROM realisiert. Dies ermöglicht eine leichte anwenderspezifische Änderung dieses Schaltungsteils. Prinzipiell sind auch programmierbare ROMs möglich, wodurch eine noch leichtere Veränderbarkeit der Selektionskriterien möglich ist, jedoch werden hierdurch auch die Manipulationsrisiken vergrößert, so daß weitere sicherheitsspezifische Schaltungsteile nötig werden.

Durch die erfindungsgemäße Vorrichtung zum Verarbeiten und Speichern von Daten mit einem kontaktbehafteten und einem kontaktlosen Zugriffspfad ist es möglich, für jeden Zugriffspfad spezifische Zugriffsmöglichkeiten zu verwirklichen. Dies geschieht auf sehr einfache Weise ohne großen schaltungstechnischen Aufwand.

## Patentansprüche

1. Vorrichtung zum Verarbeiten und Speichern von Daten, insbesondere Chipkarte,
• mit einer ersten, kontaktbehafteten Schnittstelle (1) und mit einer zweiten, kontaktlosen Schnittstelle (2) zum Empfangen von Energie von und zur Kommunikation mit einem Endgerät,
• mit einem nicht-flüchtigen Halbleiterspeicher (5),
• mit einem steuerbaren Schalter (3), über den entweder die erste oder die zweite Schnittstelle (1, 2) mit dem Halbleiterspeicher (5) über Adreß-, Daten- und Kontrolleitungen verbindbar ist und
• mit einer Logikschaltung (8), die den Schalter (3) ansteuert,
**dadurch gekennzeichnet,**
daß eine steuerbare Schalteinrichtung (7) zwischen dem steuerbaren Schalter (3) und dem Speicher (5) angeordnet ist und zumindest von der Logikschaltung (8) und einem auf den Adreßleitungen liegenden Adreßsignal (addr) ansteuerbar ist.

2. Vorrichtung nach Anspruch 1,
**dadurch gekennzeichnet**,
daß die steuerbare Schalteinrichtung (7) auch von einem Kontrollsignal (control) auf den Kontrolleitungen ansteuerbar ist und in Abhängigkeit davon den steuerbaren Schalter (3) mit dem Speicher (5) verbindet.

3. Vorrichtung nach einem der Ansprüche 1 oder 2,
**dadurch gekennzeichnet**,
daß die Logikschaltung (8) ein Mikroprozessor ist und zwischen der ersten Schnittstelle (1) und dem steuerbaren Schalter (3) angeordnet ist.

4. Vorrichtung nach einem der vorangehenden Ansprüche,
**dadurch gekennzeichnet**,
daß der steuerbare Schalter (3) ein Schalter ist, der unmittelbar nach dem Anlegen der Versorgungsspannung die zweite Schnittstelle (2) mit dem Halbleiterspeicher (5) verbindet, nur aufgrund einer Ansteuerung durch den Mikroprozessor (8) die erste Schnittstelle (1) mit dem Speicher (5) verbindet und erst bei Wegfall der Versorgungspannung in seinen Anfangszustand zurückfällt.

5. Vorrichtung nach einem der vorangehenden Ansprüche,
**dadurch gekennzeichnet,**
daß die Schalteinrichtung (7) mit Schaltmitteln (7a, 7b, 7c) und mit einem Schaltlogikteil (4) gebildet ist.

6. Vorrichtung nach einem der vorangehenden Ansprüche,
**dadurch gekennzeichnet,**
daß der steuerbare Schalter (3) Bestandteil des als Zweitorspeicher ausgeführten Speichers (5) ist.

7. Vorrichtung nach einem der vorangehenden Ansprüche,
**dadurch gekennzeichnet,**
daß die Schalteinrichtung (7) fest verdrahtet ist.

8. Vorrichtung nach einem der Ansprüche 1 bis 6,
**dadurch gekennzeichnet,**
daß das Schaltlogikteil (4) der Schalteinrichtung (7) mit einem ROM gebildet ist.

9. Vorrichtung nach einem der Ansprüche 1 bis 6,
**dadurch gekennzeichnet,**
daß das Schaltlogikteil (4) der Schalteinrichtung (7) ein programmierbares ROM ist.

## Claims

1. Device for processing and storing data, in particular a chip card,
• having a first interface (1) with contacts, and having a second, contactless interface (2) for receiving power from and for communication with a terminal device,
• having a non-volatile semiconductor memory (5),
• having a controllable switch (3), via which either the first or the second interface (1, 2) can be connected to the semiconductor memory (5) via address, data and control lines, and
• shaving a logic circuit (8), which drives the switch (3),
characterized in that a controllable switching device (7) is arranged between the controllable switch (3) and the memory (5) and can be driven at least by the logic circuit (8) and an address signal (addr) present on the address lines.

2. Device according to Claim 1, characterized in that the controllable switching device (7) can also be driven by a control signal (control) on the control lines and, in dependence thereupon, connects the controllable switch (3) to the memory (5).

3. Device according to one of Claims 1 or 2, characterized in that the logic circuit (8) is a microprocessor and is arranged between the first interface (1) and the controllable switch (3).

4. Device according to one of the preceding claims, characterized in that the controllable switch (3) is a switch which connects the second interface (2) to the semiconductor memory (5) immediately after the supply voltage is applied, connects the first interface (1) to the memory (5) only on the basis of being driven by the microprocessor (8) and returns to its initial state only when the supply voltage is no longer applied.

5. Device according to one of the preceding claims, characterized in that the switching device (7) is formed by switching means (7a, 7b, 7c) and by a switching logic part (4).

6. Device according to one of the preceding claims, characterized in that the controllable switch (3) is a component part of the memory (5) designed in the form of a dual-port memory.

7. Device according to one of the preceding claims, characterized in that the switching device (7) is hardwired.

8. Device according to one of Claims 1 to 6, characterized in that the switching logic part (4) of the switching device (7) is formed by a ROM.

9. Device according to one of Claims 1 to 6, characterized in that the switching logic part (4) of the switching device (7) is a programmable ROM.

## Revendications

1. Dispositif de traitement et de mémorisation de données, notamment carte à puce,
• Comportant une première interface (1) à contact et comportant une deuxième interface (2) sans contact pour la réception d'énergie provenant d'un terminal et pour la communication avec ce terminal,
• Comportant une mémoire (5) à semi-conducteur non volatile,
• Comportant un commutateur (3) qui peut être commandé et par l'intermédiaire duquel la première interface (1) ou la deuxième interface (2) peut être reliée à la mémoire (5) à semi-conducteur par l'intermédiaire de lignes de transmission d'adresse, de lignes de transmission de données et de lignes de contrôle et
• Comportant un circuit (8) logique qui commande le commutateur (3),caractérisé en ce que un dispositif (7) de commutation pouvant être commandé est monté entre le commutateur (3) pouvant être commandé et la mémoire (5) et peut être commandé au moins par le circuit (8) logique et par un signal (addr) d'adresse se trouvant sur les lignes de transmission d'adresse.

2. Dispositif suivant la revendication 1, caractérisé en ce que le dispositif (7) de commutation peut être commandé aussi par un signal (control) de contrôle se trouvant sur les lignes de contrôle et relie en fonction de ce signal le commutateur (3) pouvant être commandé à la mémoire (5).

3. Dispositif suivant l'une des revendications 1 ou 2, caractérisé en ce que le circuit (8) logique est un microprocesseur et est monté entre la première interface (1) et le commutateur (3) pouvant être commandé.

4. Dispositif suivant l'une des revendications précédentes, caractérisé en ce que le commutateur (3) pouvant être commandé est un commutateur qui relie la deuxième interface (2) à la mémoire (5) à semi-conducteur immédiatement après l'application de la tension d'alimentation, qui ne relie la première interface (1) à la mémoire (5) qu'en raison d'une commande par le microprocesseur (8) et qui ne revient à son état initial qu'en cas de suppression de la tension d'alimentation.

5. Dispositif suivant l'une des revendications précédentes, caractérisé en ce que le dispositif (7) de commutation est formé par des moyens (7a, 7b, 7c) de commutation et par une partie (4) logique de commutation.

6. Dispositif suivant l'une des revendications précédentes, caractérisé en ce que le commutateur (3) pouvant être commandé fait partie de la mémoire (5) réalisée en mémoire à deux portes.

7. Dispositif suivant l'une des revendications précédentes, caractérisé en ce quele dispositif (7) de commutation est à câblage fixe.

8. Dispositif suivant l'une des revendications 1 à 6, caractérisé en ce que la partie (4) logique de commutation du dispositif (7) de commutation est formée par une ROM.

9. Dispositif suivant l'une des revendications 1 à 6, caractérisé en ce que la partie (4) logique de commutation du dispositif (7) de commutation est une ROM programmable.
